(19) **Europäisches Patentamt**
**European Patent Office**
**Office européen des brevets**

(11) **EP 2 386 614 A1**

(12) **EUROPÄISCHE PATENTANMELDUNG**

(43) Veröffentlichungstag:
**16.11.2011 Patentblatt 2011/46**

(51) Int Cl.:
*C09J 7/02* (2006.01)    *D21C 5/02* (2006.01)
*D21H 11/14* (2006.01)

(21) Anmeldenummer: **10160548.3**

(22) Anmeldetag: **21.04.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(71) Anmelder: **Neenah Gessner GmbH**
**83052 Bruckmühl (DE)**

(72) Erfinder:
• **Raidt, Michael, Dr.**
  **83024 Rosenheim (DE)**
• **Nickel, Oliver**
  **83043 Bad Aibling (DE)**

(74) Vertreter: **HOFFMANN EITLE**
**Patent- und Rechtsanwälte**
**Arabellastraße 4**
**81925 München (DE)**

(54) **Umweltfreundliches Klebebandpapier und daraus hergestelltes Klebeband**

(57)    Die vorliegende Erfindung betrifft ein Papier für Klebebänder mit einem imprägnierten Papierträger, der wiederverwertete Zellulosefasern enthält, sowie Klebebänder, die ein solches Papier für Klebebänder und eine Klebstoffschicht umfassen. Die wiederverwerteten Zellulosefasern sind nur sehr wenig gemahlen und stammen hauptsächlich aus der Gruppe der langfaserigen Nadelholzzellstoffe. Das Klebebandpapier ist wenn erforderlich mit einer Trennschicht und einer Haftvermittlerschicht versehen.

**EP 2 386 614 A1**

**Beschreibung**

**Gebiet der Erfindung**

Die Erfindung betrifft ein Papier für Klebebänder (Klebebandpapier) mit einem imprägnierten Papierträger, der wiederverwertete Zellulosefasern enthält, ein solches Klebebandpapier enthaltendes Klebeband, sowie Verfahren zur Herstellung der Klebebandpapiere und Klebebänder.

**Hintergrund der Erfindung**

Klebebänder aus einem dehnfähigen und mit einer Kunststoffimprägnierung versehenen Papierträger, der auf der einen Seite eine Klebstoffschicht und auf der Gegenseite eine Klebstoff abweisende Schicht besitzt, sind seit langem bekannt. Diese Klebebänder werden auf einen Kern aus Pappe oder Kunststoff zu einer Rolle gewickelt. Dabei kommt die Klebstoff abweisende Schicht des Klebebandpapiers, die oft auch als Trennschicht oder auch als "Release Coat" bezeichnet wird, in direkten Kontakt mit der Klebstoffschicht. Die Klebstoff abweisende Wirkung der Trennschicht wird auf die Klebkraft des jeweilig verwendeten Klebers abgestimmt. Somit wird erreicht, dass die einzelnen Lagen einer Klebebandrolle so stark aufeinander haften, dass sie sich nicht von selbst voneinander trennen und die Klebebandrolle auseinanderfällt. Andererseits ist die Haftung des Klebers auf der Trennschicht nicht so hoch, dass das Klebeband beim Abziehen von der Rolle abreißt. Solche Klebebänder sind beispielsweise in der DE 38 35 507 A1 beschrieben.

Diese Klebebänder werden hauptsächlich zum Abdecken von Gegenständen bei Maler- und Lackierarbeiten, bei der Herstellung und Verarbeitung von Elektronikbauteilen und für das Verschließen von Verpackungen verwendet. Nach ihrem Gebrauch werden die Klebebänder weggeworfen und gelangen so in die Müllverbrennung oder Deponie. Dies ist insbesondere dann aus Umweltgesichtspunkten nicht optimal, wenn zur Herstellung der Klebebänder Primärrohstoffe, beispielsweise Primärzellstoffe für den Papierträger eingesetzt werden.

Um die Umweltfreundlichkeit von Papierklebebändern zu verbessern, wurde versucht, sie dem Altpapierrecycling zuzuführen. Auf Grund ihres Aufbaus lassen sich aus den meisten Papierklebebänder die Zellulosefasern während der Altpapieraufbereitung jedoch nicht mehr zurückgewinnen. Die Papierklebebänder verhalten sich ähnlich wie Kunststofffolien und werden im Altpapierprozess aussortiert und landen hier ebenfalls auf der Deponie oder in der Verbrennung.

In der Vergangenheit wurden einige Anstrengungen unternommen, wenigstens einen Teil der recht hochwertigen und wertvollen Zellulosefasern wieder zurückzugewinnen.

So beschreibt die deutsche Patentschrift DE 42 11 510 C2 ein recyclingfähiges und bedruckbares Verpackungsklebeband. Als Papierträger wird hier ein geleimtes Kraftpapier aus langfaserigem Sulfatzellstoff eingesetzt, das nach dem Clupak-Verfahren hergestellt wurde. Dadurch kann auf eine Imprägnierung des Papierträgers verzichtet werden. Der Verzicht auf die Imprägnierung hat zur Folge, dass sich zumindest ein Teil der Zellulosefasern bei der Altpapieraufbereitung wieder zurückgewinnen lässt. Nachteilig bei diesem Klebeband aber ist, dass bei der Auflösung des Papierträgers im Altpapierprozess die Klebstoffschicht zerkleinert und nicht vollständig aus dem Faserbrei aussortiert wird. Diese Klebstoffreste führen dann bei der weiteren Papierherstellung zu Produktionsstörungen in Form von Löchern, klebrigen Ablagerungen und Abrissen der Papierbahn.

Hinzu kommt noch, dass man auf eine Imprägnierung des Papierträgers nur bei solchen Klebebändern verzichten werden kann, die nach ihrer Verwendung nicht mehr rückstandsfrei vom beklebten Untergrund abgezogen werden müssen, wie z.B. bei Verpackungsklebebändern. Klebebänder für Maler- und Lackierarbeiten haften in der Regel so stark auf dem Untergrund, dass sich ein nicht imprägnierter Papierträger bei dem Versuch, das Klebeband abzuziehen, aufspaltet. Aufspalten oder Delaminieren bedeutet, dass das Klebebandpapier beim Abziehen in sich, also parallel zum Klebesteifen, reißt, so dass auf dem verklebten Untergrund die Klebstoffschicht mit einem Teil des Klebebandpapiers zurückbleibt. Dies ist natürlich unerwünscht.

Ein denkbarer alternativer Ansatz, um zu umweltfreundlicheren Klebebändern zu kommen, könnte der Ersatz von wertvollen, hochwertigen Primärrohstoffen durch wiederverwertete Rohstoffe, beispielsweise der Ersatz von Primärzellstoffen durch wiederverwertete Zellulosefasern beim Klebebandpapier sein. Dadurch würde vermieden, dass für die Herstellung des Wegwerfartikels Papierklebeband Bäume gefällt und verarbeitet werden müssen.

In der DE 44 04 045 A1 wird ein Versuch in diese Richtung unternommen. Darin ist ein Klebeband für den Einsatz als Fusselrolle beschrieben, in dem das Trägerband vollständig aus recyceltem Altpapier besteht. In der Schrift wird darauf hingewiesen, dass Papiere aus wiederverwertetem Altpapier eine geringe innere Festigkeit haben und somit im Allgemeinen nicht für die Verwendung als Träger für Klebebänder in Frage kommen. Die Erfindung gemäß DE 44 04 045 A1 ist nur möglich, weil gleichzeitig ein sehr schwacher Kleber verwendet wird, der zwar Fussel und Schmutz bindet, jedoch nur sehr schwach auf der Rückseite des Papierträgers und z.B. auf Tischen klebt. Allgemein soll nach der Lehre der DE 44 04 045 A1 die Klebkraft des Haftklebstoffs geringer sein als die innere Festigkeit des Trägerbandes (Papierträgers). Damit wird vermieden, dass beim Abrollen einer Lage Klebeband von der Fusselrolle der Papierträger wegen seiner geringen inneren Festigkeit aufspaltet und abreißt. Auf die Art des eingesetzten wiederverwerteten Zellstoffs wird in der DE 44 04 045 A1 dabei nicht eingegangen, ebenso wenig wie auf den Herstellungsprozess des Klebebandpapiers. Ein Klebeband nach dieser Lehre ist für den technischen Einsatz gänzlich ungeeignet. Der Klebstoff ist viel zu schwach um auf den meisten Oberflächen zuverlässig zu halten. Eine Erhöhung der Klebkraft des Klebers hätte andererseits die Folge, dass der Kleber zu stark auf der Rückseite des Klebebandpapiers haftet und das Klebeband in Folge seiner zu geringen inneren Festigkeit bei dem Versuch, eine oder mehrere Lagen abzuwickeln, reißt. Selbst wenn man eine Lage Klebeband von der Rolle herunterbrächte, würde es sich nicht mehr in einfacher Weise vom beklebten Gegenstand entfernen lassen, da es auch hier auf Grund seiner geringen inneren Festigkeit aufspaltet.

JP 06-248244 A beschreibt ein Trennpapier für Klebebänder, das unter anderem auch aus wiederverwertetem Altpapier bestehen kann. Die Art der eingesetzten Altpapierfaser und der Herstellprozess werden auch hier nicht weiter beschrieben. Das Trennpapier besitzt eine Trennschicht aus einer Siliconverbindung, auf der auch sehr starke Klebstoffe nur sehr leicht kleben und somit auch mit sehr geringem Kraftaufwand wieder abgezogen werden können. Die innere Festigkeit spielt in diesem Zusammenhang meist keine Rolle. Trennpapiere werden aber im Gegensatz zu Klebebandpapieren nicht selbst mit Klebstoff beschichtet, um sie dann auf einen Gegenstand aufzukleben, sondern dienen als Schutzschicht für den Klebstoff eines Klebebandes vor dem Gebrauch. Bevor das Klebeband dann auf einen Gegenstand verklebt werden soll, wird das Trennpapier vom Klebstoff abgezogen. Angenommen man würde ein solches Trennpapier selbst mit Klebstoff beschichten, so wäre die innere Festigkeit des beschriebenen Trennpapiers wiederum zu gering, um es vollständig und rückstandsfrei vom beklebten Gegenstand abzuziehen. Die Innere Festigkeit bzw. Spaltfestigkeit ist die Kraft die zu überwinden ist, um eine Papierbahn in zwei Einzellagen zu spalten.

Es bestand somit Bedarf nach umweltfreundlichen Klebebändern, die gleichzeitig ausgezeichnete mechanische Eigenschaften haben, um beispielsweise zum Bekleben von Gegenständen bei Maler- und Lackierarbeiten, bei der Herstellung und Verarbeitung von Elektronikbauteilen und als Verpackungsklebebänder verwendet werden können.

**Zusammenfassung der Erfindung**

Aufgabe der vorliegenden Erfindung ist es, ein Papierklebeband und ein darin verwendbares Klebebandpapier zur Verfügung zu stellen, das umweltfreundlicher ist als herkömmliche Klebebänder, wie sie beispielsweise in der DE 38 35 507 A1 beschrieben sind, und das dennoch die erforderliche Festigkeit und Dehnfähigkeit besitzt, um für den Einsatz zum Abkleben von Gegenständen bei Maler- und Lackierarbeiten, bei der Herstellung und Verarbeitung von Elektronikbauteilen und als Verpackungsklebebänder geeignet zu sein.

Diese Aufgabe wird erfindungsgemäß durch ein Papier für Klebebänder gelöst, das einen imprägnierten Papierträger umfasst, das dadurch gekennzeichnet ist, dass der Papierträger wiederverwertete Zellulosefasern enthält. Vorteilhafte Ausführungsformen des Klebebandpapiers sind den Ansprüchen 2 bis 11 zu entnehmen. Ein Klebeband, das ein solches Klebebandpapier und eine Klebstoffschicht umfasst, ist Gegenstand des Anspruchs 12.

Der Oberbegriff des Patentanspruchs 1 ist dabei der Lehre der DE 38 35 507 A1 nachgebildet. Vorteilhafte Ausführungsformen der Erfindung sind in den weiteren Ansprüchen beschrieben.

Völlig überraschend haben die Erfinder festgestellt, dass Klebebandpapiere mit einem imprägnierten Papierträger, der wiederverwertete Zellulosefasern enthält, nahezu die gleichen für die genannten Anwendungen relevanten mechanischen Eigenschaften besitzen, wie ein Klebebandpapiere aus hochwertigem Primärzellstoff. Dies war aus fachmännischer Sicht nicht zu erwarten. Der Grund liegt darin, dass beispielsweise die aus Altpapier stammenden wiederverwerteten Zellulosefasern aufgrund ihrer kurzen Faserlänge zu geringe Festigkeiten erwarten ließen, um in Klebebandpapieren für die zuvor beschriebenen Anwendungsgebiete zum Einsatz kommen zu können.

**Detaillierte Beschreibung der Erfindung, Ausführungsbeispiele**

Das erfindungsgemäße Klebeband, bei dem es sich insbesondere um ein Papierklebeband handelt, umfasst einen imprägnierten Papierträger, der wiederverwertete Zellulosefasern enthält und auf mindestens einer Seite mit einer Klebstoffschicht versehen ist. Zur besseren Verankerung der Klebstoffschicht kann das Klebebandpapier vor dem Klebstoffauftrag noch mit einem Haftvermittler beschichtet werden. Falls der aufgetragene Kleber ein Selbstkleber ist und nur eine Seite des Klebebandpapiers mit einer Klebstoffschicht versehen wird, wird auf der anderen Seite des Klebebandpapiers vorteilhaft eine Klebstoff abweisende Trennschicht aufgebracht. Zur Erhöhung der Weichheit und Glätte kann das imprägnierte Klebebandpapier vor der Klebstoffbeschichtung noch kalandriert werden.

In der vorliegenden Anmeldung wird der Terminus "wiederverwertete" Zellulosefasern gleichbedeutend mit "recycelte" Zellulosefasern verstanden. Es handelt sich beispielsweise um aus Altpapier gewonnene Zellulosefasern. Der Anteil der wiederverwerteten Zellulosefasern in dem imprägnierten Papierträger, bezogen auf die darin enthaltenen Zellulosefasern insgesamt (also recycelte Zellulosefasern + nicht-recycelte, also Primärzellulosefasern) ist vorzugsweise > 50 %, mehr bevorzugt ≥ 90 % und noch mehr bevorzugt ≥ 95 %. Gemäß einer besonders bevorzugten Ausführungsform enthält der imprägnierte Papierträger in dem erfindungsgemäßen Klebebandpapier ausschließlich recycelte Zellulosefasern und keine Primärzellulosefasern, also nicht-recycelte Zellulosefasern.

Als erfindungsgemäß besonders geeignete wiederverwertete Zellulosefasern erwiesen sich solche, die aus ungeleimten Altpapiersorten der Gruppe 4 (krafthaltige Sorten) gemäß "Altpapier-Liste der europäischen (CEPI/B.I.R.) Standardsorten und ihre Qualitäten", Juli 2000, gewonnen werden. Bevorzugte Altpapiersorten sind Seidenpapiere, Seidenkraftpapiere und Sulfatkartons. Diese Altpapiersorten sind charakterisiert durch hohe Festigkeiten und einen niedrigen Mahlgrad der darin enthaltenen Zellstofffasern. Sie enthalten einen besonders großen Anteil an Nadelholzzellulosefasern (z.B. Fichte, Kiefer etc.). Nadelholzzellulosefasern haben generell eine deutlich größere Faserlänge als Zellulosefasern aus Laubbäumen. Entsprechend ist es für die Festigkeit des erfindungsgemäßen Klebebandpapiers vorteilhaft, wenn die wiederverwerteten Zellulosefasern langfaserige Nadelholzzellulosefasern sind.

Die erfindungsgemäß eingesetzten wiederverwerteten Zellulosefasern haben vorteilhaft die in der folgenden Tabelle zusammengestellten Eigenschaften. Um diese Eigenschaften zu messen, wurde nach dem Rapid-Köthen-Verfahren ein Laborblatt mit der Flächenmasse von 70 g/m$^2$, das aus 100% der zu untersuchenden wiederverwerteten Zellulosefasern besteht, hergestellt.

Das Herstellungsverfahren nach Rapid-Köthen soll im Folgenden näher beschrieben werden. Der zu untersuchende Zellstoff wurde vier Stunden bei 105°C im Umlufttrockenschrank getrocknet. 24 g des so getrockneten Zellstoffs wurden zwecks Zerfaserung durch Zugabe von Leitungswasser auf ein Zellstoff-Wasser-Volumen von 2000 ml gebracht und entsprechend zerkleinert. Die Suspension wird nun in den Aufschlagbehälter eingetragen. Bei einer Temperatur des Behälterinhalts von 15 bis 20°C wird die Zerfaserung genau 25 Minuten lang bei einer Umdrehungsgeschwindigkeit des Propellers von 3000 U/min durchgeführt. Im Augenblick der Probennahme zur Bildung des Laborblatts muss der Verteilungszustand der Zellulosefasern in der Zellstoffsuspension ganz gleichmäßig sein. Dies wird durch gute Durchmischung mit geeigneten Mischgefäßen erreicht. Beispielsweise kann die Faserstoffsuspension in ein Verteilergerät überführt werden. Dann erfolgt die Verdünnung mit Leitungswasser auf 9000 ml Zellstoff-Wasser-Volumen. Anschließend wird das Verteilergerät eingeschaltet und bis zum Beginn der Abfüllung in die 1 l-Meßzylinder mindestens 2 Minuten und nicht länger als 10 Minuten gemischt.

Zur eigentlichen Bildung des Laborblatts und dessen Trocknung wird eine Rapid-Köthen-Blattbildungs- und Trocknungs-Anlage verwendet. Sie ist beispielsweise mit einer Gautschrolle (Durchmesser (102-130 mm), Länge (240-260 mm), Gewicht (3±0,2 kg); Mantelfläche aus 20 mm dicken Filz) ausgerüstet.

Von der erhaltenen Faserstoffsuspension werden bei einer angestrebten Flächemasse von 70 g/m$^2$ ca. 800 ml in die 1 l Messzylinder abgefüllt. Die Füllkammer der Rapid-Köthen-Blattbildungs- und Trocknungs-Anlage wird mit Wasser geflutet. In die Füllkammer, die ca. 4 - 5 l Wasser enthält, wird Luft gedrückt und die Faserstoffsuspension hineingegossen. Man lässt 5 Sekunden durchwirbeln, schaltet die Luftzufuhr ab und saugt das Wasser so schnell wie möglich ab. Anschließend wird noch 10 Sekunden lang Luft durch das Blatt gesaugt. Ein Papierdeckblatt wird zentrisch auf das nasse Blatt gelegt. Die Gautschrolle lässt man ohne zusätzlichen Druck in zwei zueinander senkrechten Richtungen je einmal über das Blatt in 2 Sekunden hin- und herrollen. Das Blattbildungssieb wird vom Stützsieb abgenommen, umgedreht und leicht geneigt mit dem Rand auf eine horizontale Unterlage geschlagen, sodass das nasse Blatt mit dem Deckblatt nach unten abfällt. Spätestens 1 Minute nach dem Abgautschen wird das nasse Blatt auf dem Deckblatt ruhend auf das Stützsieb des Trockners gelegt. Auf das nasse Blatt wird ein weiteres Deckblatt gelegt, der Trockner wird dann sofort geschlossen und mit Hilfe der Vakuumpumpe evakuiert. Die Trocknung erfolgt (8-10) Minuten bei ca. 96°C und einem Unterdruck von 95 kPa.

In dieser Anmeldung wird ein auf diese Weise aus den Zellulosefasern, deren Eigenschaften untersucht werden sollen, hergestelltes Prüfblatt als Laborblatt, gebildet nach dem Rapid-Köthen-Verfahren, bezeichnet.

Die für das Rapid-Köthen-Verfahren maßgebliche Norm ist die DIN EN ISO 5269-2.

Die wiederverwerteten Zellulosefasern, die erfindungsgemäß besonders vorteilhaft zum Einsatz kommen, haben die im folgenden tabellarisch zusammengestellten Eigenschaften (Laborblattbildung nach Rapid-Köthen; Laborblattgewicht 70 g/m$^2$):

| Reisslänge | m | >3500, bevorzugt >5000 |
|---|---|---|
| Bruchkraft | N/15 mm | >35, bevorzugt >55 |
| Mahlgrad | °SR | <50, bevorzugt <22 |
| Saughöhe | Mm | >0, bevorzugt >20 |
| Durchreißwiderstand quer | mN | >500, bevorzugt >600 |

Die Herstellung des Papierträgers aus dem Papierstoff, der wiederverwertete Zellulosefasern enthält, erfolgt nach dem bekannten Stand der Technik, wobei eventuell vorhandene Schmutzteile im Papierstoff durch übliche Sortiereinrichtungen ausgetragen werden. In dem Papierstoff ist der Anteil der wiederverwerteten Zellulosefasern, bezogen auf die darin enthaltenen Zellulosefasern insgesamt, wie zuvor angegeben, also vorzugsweise > 50 %, mehr bevorzugt ≥ 90 % und noch mehr bevorzugt ≥ 95 %. Besonders vorteilhaft handelt es sich um Papierstoff, der aus ungeleimten Altpapiersorten der Gruppe 4 (krafthaltige Sorten) gemäß "Altpapier-Liste der europäischen (CEPI/B.I.R.) Standardsorten und ihre Qualitäten", Juli 2000 besteht. Der Papierstoff wird mit den für die Herstellung von Klebebandpapier üblichen Mahlaggregaten gemahlen, und zwar vorzugsweise mit einem maximalen Energieeintrag, der nur 40 bis 80%, mehr bevorzugt 50 bis 70% des Energieeintrags ausmacht, der zur Mahlung von primären, langfaserigen Nadelholzsulfatzellstoffen benötigt wird. Die Mahlung ist vorteilhaft, um die Festigkeit des Papierträgers zu erhöhen. Zusätzlich können dem Papierstoff bei Bedarf noch die in der Papierherstellung üblichen Hilfsstoffe, wie z.B. Nassfestmittel, Retentionsmittel, Füllstoffe und/oder Farben zugegeben werden.

Der Papierbahn des Papierträgers kann zusätzlich eine höhere Dehnung verliehen werden. Dies kann z.B. durch das Nasskreppen, Trockenkreppen oder das Clupak-Verfahren geschehen, ist aber nicht auf diese Beispiele beschränkt. Jeder Prozess, der der Papierbahn eine zusätzliche Dehnung verleiht, ist für die Herstellung des Papierträgers geeignet.

Beim Nasskreppverfahren wird die feuchte, auf der Oberfläche eines Zylinders haftende Bahn noch in der Papiermaschine durch einen an einem Zylinder anliegenden Schaber abgenommen. Eine Differenz in der Antriebsgeschwindigkeit des Kreppzylinders und der folgenden Überführ- und Trockeneinheit bewirkt, die auf 2 bis 50 % eingestellt werden kann, bewirkt, dass die Papierbahn um diesen Betrag "eingekreppt", d.h. durch Erzeugen feiner Falten um diesen Betrag verkürzt wird.

Das Trockenkreppverfahren arbeitet nach einem ähnlichen Prinzip, nur dass die Kreppung außerhalb der Papiermaschine geschieht. Das bereits getrocknete Papier wird vor dem Einlauf in die Kreppvorrichtung angefeuchtet.

Beim Clupak-Verfahren wird die noch feuchte Papierbahn zwischen einer rotierenden Walze und einer rotierenden, elastischen Bahn, meist ein Gummituch, gestaucht. Dadurch wird die Dehnfähigkeit des Papiers bei einer sehr glatten Oberfläche erreicht.

Die so hergestellte Papierträger hat eine Flächenmasse von 30 bis 100 g/ $m^2$, bevorzugt von 35 bis 60 g/ $m^2$, eine Bruchdehnung von 2 bis 20 %,bevorzugt von 5 bis 15 %, eine Bruchkraft trocken in Längsrichtung von 25 bis 100 N/15 mm, bevorzugt von 25 bis 60 N/15 mm, eine Bruchkraft trocken in Querrichtung von 20 bis 80 N/15 mm, bevorzugt von 10 bis 20 N/15 mm, eine Spaltfestigkeit von mind. 1,7 N/15 mm, bevorzugt von mind. 2,5 N/15 mm, und eine Dicke von 0,05 bis 0,150 mm, bevorzugt von 0,100 bis 0,120 mm.

Der Papierträger wird anschließend imprägniert. Das heißt, der Papierträger wird mit einem Imprägniermittel durchtränkt. Eine Imprägnierung ist von einer lediglich oberflächlich erfolgenden Beschichtung zu unterscheiden. Die Imprägnierung ist notwendig, um dem erfindungsgemäßen Klebebandpapier, sowie dem daraus hergestellten Klebeband, die nötige Festigkeit und Flexibilität zu geben und einen nicht saugfähigen Untergrund für die späteren Beschichtungen zu schaffen. Geeignete Imprägniermittel sind Polymerdispersionen, Polymerlösungen oder Mischungen daraus.

Als Polymerdispersionen kommen z.B. wässrige Dispersionen aus Acrylsäureestern, Polyvinylacetat, Acrylnitril-Butadien-Kautschuk, Acrylsäurester-Styrol-Copolymere, EthylenVinylacetat-Copolymere, Styrol-butadien-Kautschuk, Phenolharz, Epoxydharz, Naturkautschuk oder Mischungen daraus in Frage.

Geeignete Polymerlösungen sind z. B. Polyvinylalkohol in Wasser, Stärke in Wasser, Phenolharz in Methanol, Epoxydharz in Methanol oder Mischungen daraus.

Ein erfindungsgemäß besonders geeignetes Imprägniermittel ist eine wässrige Styrol - Butadien-Kautschuk- Dispersion mit einer Glasübergangstemperatur zwischen -30°C und + 10 °C, bevorzugt zwischen -10 und + 5 °C. Die Imprägniermittelmenge liegt zwischen 5 Gew.% und 50 Gew.%, bevorzugt zwischen 10 Gew.% und 20 Gew.%, der trockenen Dispersion bezogen auf das Gewicht des zu imprägnierenden Papierträgers.

Dem Imprägniermittel können noch verschiedene Additive und/oder Füllstoffe zugegeben werden. Beispiele für Additive sind Farben, Vernetzer, Hydrophobierungsmittel, Oleophbierungsmittel, Hydrophilierungsmittel oder Mischungen daraus. Als Füllstoff kann z.B. Kaolin, Titandioxid, Talkum, Kalziumkarbonat, Siliziumdioxid oder Mischungen daraus eingesetzt werden

In einer speziellen Ausführungsform des Klebebandpapiers ist auf einer Seite des imprägnierten Papierträgers eine Trennschicht aufgetragen. Diese Trennschicht kann beispielsweise durch Aufbringung einer wässrige Dispersion auf der Basis von Acryläureestern, Polyvinylacetat, Acrylsäure-Styrol-Copolymeren, Styrol-Butadien-Kautschuk, langkettigen Fettsäure- und/oder Fettalkoholderivaten, Paraffinen, Siliconverbindungen oder Mischungen daraus hergestellt werden. Durch das Mischungsverhältnis der dabei verwendeten Komponenten kann die Trennschicht in ihrer Wirkung auf eine große Anzahl verschiedener Kleber abgestimmt werden. Die Auftragsmenge nach dem Trocknen (Trockenbeschichtungsmenge) beträgt 1 - 5 g/$m^2$, bevorzugt 2 - 3 g/$m^2$.

Eine weitere Variante des erfindungsgemäßen Klebebandpapiers ist dadurch gegeben, dass auf der Seite des imprägnierten Papierträgers, die nicht mit der Trennschicht versehen ist, also auf der Seite, die bei der Herstellung des Klebebands mit Klebstoff beschichtet wird, ein Haftvermittler aufgetragen wird und so eine Haftvermittlerschicht ausgebildet wird. Der Haftvermittler besteht vorzugsweise aus einer wässrigen Dispersion auf der Basis Naturlatex, Acrylnitril- Butadien-Kautschuk, Styrol-Butadien-Kautschuk, Acrylsäureester oder Mischungen daraus. Die Auftragsmenge nach dem Trocknen (Trockenbeschichtungsmenge)beträgt 1 - 5 g/$m^2$, bevorzugt 1 - 2 g/$m^2$.

Sowohl dem Imprägniermittel als auch der Trennschicht und dem Haftvermittler können noch verschiedene Additive und/oder Füllstoffe zugegeben werden. Beispiele für Additive sind Farben, Vernetzer, Hydrophobierungsmittel, Oleophbierungsmittel, Hydrophilierungsmittel oder Mischungen daraus. Als Füllstoff kann z.B. Kaolin, Titandioxid, Talkum, Kalziumkarbonat, Siliziumdioxid oder Mischungen daraus eingesetzt werden

Die Imprägnierung des Papierträgers und die Beschichtung des imprägnierten Papierträgers können entweder innerhalb der Papiermaschine oder außerhalb in einer eigens dafür entworfenen Imprägnier- und Beschichtungsmaschine geschehen. Geeignete Imprägnierverfahren sind z.B. Leimpresse, Tauchimprägnierung, Schaumimprägnierung, Walzenimprägnierung oder Aufsprühen. Geeignete Beschichtungsverfahren sind z.B. Rollrakel, Messerrakel, Luftbürste oder Walzenauftrag.

Zur Steigerung der Oberflächenglätte und der Flexibilität kann das imprägnierte und mit Trennschicht und/oder Haftvermittler beschichtete Papier kalandriert werden. Bevorzugt läuft das erfindungsgemäße Klebebandpapier dabei durch den Spalt eines Walzenpaares bestehend aus einer Stahl-und einer Gummiwalze mit einem Spaltdruck von 30 bis 300 N/mm, bevorzugt von 50 bis 150 N/15 mm, wobei die Seite mit der Trennschicht mit der Stahlwalze in Berührung kommt. Die Kalandertemperatur liegt zwischen 20° und 70°C, bevorzugt zwischen 60 und 70 °C.

Zur Herstellung des Klebebandes wird das erfindungsgemäße Klebebandpapier noch mit einer Klebstoffschicht versehen. Besitzt das Klebebandpapier eine Trennschicht, so wird der Kleber auf die Gegenseite aufgebracht. Der verwendete Kleber kann entweder ein Selbstkleber sein oder ein Kleber, der durch Anfeuchten mit einem Lösemittel, bevorzugt Wasser, oder durch Hitze aktiviert wird. Es kommen alle Arten von Kleber in Frage, die nach dem Stand der Technik für Papierklebebänder bekannt sind. Die Auswahl des geeigneten Klebers hängt vom Einsatzzweck des erfindungsgemäßen Klebebandes ab. Das Auftragsgewicht des Klebers bewegt sich zwischen 20 g/m$^2$ und 50 g/m$^2$ und bevorzugt zwischen 30 g/m$^2$ und 35 g/m$^2$.

Prüfmethoden

Flächenmasse nach DIN EN ISO 536

Dicke nach DIN EN ISO 534 mit 20 N Auflagedruck und einer Messfläche von 200 mm$^2$

Bruchkraft trocken längs und quer nach DIN EN ISO 1924-2

Bruchdehnung trocken längs und quer nach DIN EN ISO 1924-2 Reißlänge:

$$R = 1000 \times F_B / (m_A \times b \times g)$$

R = Reißlänge

$F_B$ = Bruchkraft trocken längs nach DIN EN ISO 1924-2

$m_A$ = Flächenmasse nach DIN EN ISO 536

b= Breite des Prüflings in mm

g = 9,81 m$^2$/s

Saughöhe längs und quer nach DIN ISO 8787

Durchreisswiderstand nach Elmendorf nach DIN EN 21974 mit einem Probenpaket aus 4 Papierblättern

Mahlgrad nach Schopper Riegler DIN ISO 5267-1

Spaltfestigkeit :

Aus einem vorher 24 Stunden bei 23°C und 50 % relativer Luftfeuchtigkeit klimatisierten Klebebandpapiermuster wird ein Streifen mit ca. 52 mm Breite und ca. 200 mm Länge geschnitten. Die 200 mm lange Seite verläuft dabei parallel zur Laufrichtung des Papiers. Auf dieses Muster wird dann ein 50 mm breiter und ca. 150 mm langer Streifen des Testklebebandes Scotch 2836 geklebt. Das Testklebeband wird dabei auf die Seite des zu prüfenden Klebebandpapiermusters geklebt, die die größte Haftung zum Testklebeband hat. Anschließend wird der Verbund aus dem zu prüfendem Klebebandpapier und dem Testklebeband mit einer 4,5 kg schweren und 50 mm breiten Stahlwalze miteinander verpresst. Die Stahlwalze wird dabei zweimal per Hand ohne zusätzliche Druckausübung über den Verbund gerollt (einmal hin und einmal zurück). Anschließend werden aus diesem Verbund 2 Streifen in 15 mm Breite und der gesamten Länge geschnitten. Von einer der beiden Seiten her, an der das zu prüfende Klebebandpapier übersteht, wird das Testklebeband per Hand so abgezogen, dass das zu prüfenden Klebebandpapier über die ganze Probenbreite aufgespalten wird. Bei schlechter Haftung des Testklebebands auf dem zu prüfenden Klebebandpapier und bei sehr hoher Spaltfestigkeit muss das zu prüfende Klebebandpapier mit einer Rasierklinge vorsichtig eingeschnitten und dann mit Hilfe des Testklebebandes weiter gespalten werden. Die Messung der Spaltfestigkeit erfolgt in einer Universalprüfmaschine der Fa. Zwick Typ Röll Z 0.5 mit folgenden Einstellungen:

Messbereich 0,5 F
Programm Spaltfestigkeit
Geschwindigkeit 300 mm/min
Klemmenabstand 50 mm
Vorweg 20 mm
Prüfstrecke 80 mm

Das mit der Hand abgezogene Testklebeband Scotch 2836 wird in die obere Klemme der Zugprüfmaschine eingespannt. Das zu prüfende Klebebandpapier wird so in die untere Klemme der Universalprüfmaschine eingespannt, dass der Verbund im 90°-Winkel zur Zugrichtung absteht. Während der Messung ist darauf zu achten, dass die Spaltung in der Mitte des zu prüfenden Klebebandpapiers erfolgt und nicht nur einzelne Fasern aus der Papieroberfläche gerissen werden. Messungen, bei denen die Spaltung nicht in Papiermitte erfolgt, werden verworfen und wiederholt. Gemessen wird die durchschnittliche Kraft, die benötigt wird, um das Papier zu spalten. Das Ergebnis ist der Mittelwert aus zwei Einzelmessungen.

**Beispiel 1 (Ausführungsbeispiel)**

Zur Herstellung des Klebebandrohpapiers wurde 100% Altpapier der Sorte Seidenkraftpapier braun, erhältlich von der C.A. Lensing Entsorgung GmbH unter der Bezeichnung Seidenkraftpapier braun/weiß, verwendet. Die Zellulosefasern dieser Altpapiersorte hatten folgende Eigenschaften (gemessen an einem Laborblatt, hergestellt nach Rapid-Köthen-Verfahren nach DIN EN ISO 5269-2; Laborblattgewicht 70 g/m$^2$) :

| Reisslänge | m | 5450 |
|---|---|---|
| Bruchkraft | N/15 mm | 59,2 |
| Mahlgrad | °SR | 32 |
| Saughöhe | mm | 21 |
| Durchreißwiderstand quer | mN | 534 |

Aus dem oben beschriebenen Altpapier wurde in einer Papiermaschine in üblicher Weise eine Papierbahn hergestellt. Der Energieeintrag beider Mahlung betrug 10 kWh/100 kg Fasermasse. Die Papierbahn wurde in noch feuchtem Zustand auf einen Kreppzylinder geführt, von dort durch einen Schaber, wie in DE 4019680 A1 beschrieben, abgenommen und anschließend mittels Trockenzylinder getrocknet. Das so hergestellte Klebebandrohpapier (Papierträger) hatte folgende Eigenschaften:

| | |
|---|---|
| Flächenmasse: | 48,8 g/m$^2$ |
| Dicke | 0,127 mm |
| Bruchkraft trocken längs | 39,7 N/15 mm |
| Bruchkraft trocken quer | 16,9 N/15 mm |
| Bruchdehnung trocken längs | 7,0 % |
| Bruchdehnung trocken quer | 11,6 % |
| Saughöhe längs | 20 mm |
| Saughöhe quer | 25 mm |
| Saughöhe gesamt | 45 mm |

Das Papierträger des Klebebandpapiers wurde anschließend in einer Tauchimprägnierung mit einer wässrigen Styrol-Butadien-Kautschuk-Dispersion der Sorte Litex SX 1009, erhältlich von der Firma Polymerlatex getränkt und anschließend getrocknet. Der Kautschuk hat eine Glasübergangstemperatur von -6°C. Das Imprägniergewicht betrug nach dem Trocknen 5 g/m$^2$, was einem Verhältnis von 10,2 % bezogen auf die Fasermenge entspricht.

In einem weiteren Arbeitsgang wurde das imprägnierte Papier auf einer Seite mit 3 g/m$^2$ einer Trennschicht, bestehend aus Primal R253 der Firma Rohm und Haas, und auf der Gegenseite mit 1g/m$^2$ eines Haftvermittlers , bestehend aus Graftex 49 der Firma Centrotrade, beschichtet. Jedem Beschichtungsschritt folgte eine vollständige Trocknung des Papiers.

Schließlich wurde das imprägnierte und beschichtete Klebebandpapier zwischen einer Stahl- und einer Gummiwalze bei einem Spaltdruck von 50 N/mm unter der Temperatur von 70°C kalandriert. Die Seite der Trennschicht kam dabei mit der Stahl-Walze in Berührung.

Die Eigenschaften des so hergestellten imprägnierten und beschichteten Klebebandpapieres sind in Tabelle 1 aufgelistet.

## Beispiel 2 (Vergleichsbeispiel)

Zur Herstellung des Klebebandrohpapiers wurde Zellstoff der Sorte NBSK, erhältlich von der Firma Canfor unter der Bezeichnung Interconti ECF 90 verwendet. Die Zellulosefasern dieser Zellstoffsorte hatten die folgenden Eigenschaften (gemessen an einem Laborblatt, hergestellt nach Rapid-Köthen-Verfahren nach DIN EN ISO 5269-2; Laborblattgewicht 70 g/m$^2$):

| | | |
|---|---|---|
| Reisslänge | m | 3420 |
| Bruchkraft | N/15 mm | 37,1 |
| Mahlgrad | °SR | 14 |
| Saughöhe | mm | 78 |
| Durchreißfestigkeit quer | mN | 1064 |

Aus dem oben beschriebenen Zellstoff wurde in einer Papiermaschine in üblicher Weise eine Papierbahn hergestellt. Der Energieeintrag beider Mahlung betrug 17 kWh/100 kg Fasermasse. Die Papierbahn wurde in noch feuchtem Zustand auf einen Kreppzylinder geführt, von dort durch einen Schaber, wie in DE 4019680 A1 beschrieben, abgenommen und anschließend mittels Trockenzylinder getrocknet. Das so hergestellte Klebebandrohpapier hatte folgende Eigenschaften:

Aus dem so hergestellten Zellstoffbrei wurde nach einem dem Stand der Technik üblichen Verfahren eine nassgekreppte Papierbahn hergestellt, die folgende Eigenschaften hatte:

| | |
|---|---|
| Flächenmasse: | 41 g/m$^2$ |
| Dicke | 0,100 mm |
| Bruchkraft trocken längs | 38 N/15 mm |
| Bruchkraft trocken quer | 16 N/15 mm |
| Bruchdehnung trocken längs | 13 % |
| Bruchdehnung trocken quer | 5 % |
| Saughöhe längs | 30 mm |
| Saughöhe quer | 45 mm |
| Saughöhe gesamt | 75 mm |

Die so hergestellte Papierbahn wurde anschließend mittels Tauchimprägnierung mit einer wässrigen Styrol-Butadien-Kautschuk-Dispersion der Sorte Litex 1009 erhältlich von der Firma Polymerlatex imprägniert. Der Kautschk hat eine Glasübergangstemperatur von -4 °C. Das Imprägniergewicht betrug nach dem Trocknen 15 g/m$^2$, was einem Verhältnis von 40 Gew.% bezogen auf die Fasermenge entspricht.

In einem weiteren Arbeitsgang wurde das imprägnierte Papier auf einer Seite mit 3 g/m$^2$ einer Trennschicht, bestehend aus Primal R253 der Firma Rohm und Haas, und auf der Gegenseite mit 1 g/m$^2$ eines Haftvermittlers , bestehend aus Graftex 49 der Firma Centrotrade, beschichtet. Jedem Beschichtungsschritt folgte eine vollständige Trocknung des Papiers.

Die Eigenschaften des so hergestellten Klebebandpapiers sind in Tabelle 1 aufgelistet.

Tabelle 1

| | Beispiel 1 | Beispiel 2 |
|---|---|---|
| Flächenmasse | 65,1 g/m$^2$ | 60,3 g/m$^2$ |
| Dicke | 0,092 mm | 0,098 mm |
| Bruchkraft trocken längs | 72,2 N/15 mm | 69,4 N/15 mm |

(fortgesetzt)

|  | Beispiel 1 | Beispiel 2 |
|---|---|---|
| Bruchkraft trocken quer | 30,9 N/15 mm | 30,4 N/15 mm |
| Bruchdehnung trocken längs | 5,3 % | 10,0 |
| Bruchdehnung trocken quer | 11,4 % | 10,4 |
| Durchreißwiderstand längs | 401 mN | 389 mN |
| Durchreißwiderstand quer | 534 mN | 516 mN |
| Spaltfestigkeit | 2,65 N/15 mm | 4,2 N/15 mm |

Der Vergleich der beiden Beispiele macht deutlich, dass das erfindungsgemäße Klebebandpapier (Beispiel 1) trotz des Einsatzes von wiederverwerteten Zellulosefasern nahezu die gleichen Eigenschaften hat wie ein Klebebandpapier aus hochwertigem Primärzellstoff (Beispiel 2) und somit für alle üblichen Einsatzzwecke geeignet ist. Die Unterschiede in der Bruchdehnung trocken längs ergeben sich aus den Maschineneinstellungen bei der Kreppung und sind nicht auf den unterschiedlichen Fasereinsatz zurückzuführen. Wie zu erwarten, ist die Spaltfestigkeit des erfindungsgemäßen Papiers (Beispiel 1) niedriger als die eines Papiers mit hochwertigen Primärzellstoffen (Beispiel 2). Sie ist jedoch überraschenderweise hoch genug, um die Anforderungen während der Weiterverarbeitung und während des Gebrauchs zu erfüllen.

**Patentansprüche**

1. Papier für Klebebänder, umfassend einen imprägnierten Papierträger, **dadurch gekennzeichnet, dass** der Papierträger wiederverwertete Zellulosefasern enthält.

2. Papier für Klebebänder nach Anspruch 1, **dadurch gekennzeichnet, dass** die wiederverwerteten Zellulosefasern Nadelholzzellulosefasern sind.

3. Papier für Klebebänder nach Anspruch 1 oder 2, **dadurch gekennzeichnet, dass** die wiederverwerteten Zellulosefasern aus ungeleimten Altpapiersorten der Gruppe 4 gemäß der Liste der europäischen CEPI/B.I.R - Standardsorten stammen.

4. Papier für Klebebänder nach mindestens einem der Ansprüche 1 bis 3, **dadurch gekennzeichnet, dass** der Mahlgrad der wiederverwerteten Zellulosefasern kleiner als 50° Schopper Riegler ist.

5. Papier für Klebebänder nach mindestens einem der Ansprüche 1 bis 4, **dadurch gekennzeichnet, dass** ein Laborblatt, bestehend aus 100% der wiederverwerteten Zellulosefasern, mit der Flächenmasse von 70 g/m$^2$, gebildet nach dem Rapid-Köthen-Verfahren, eine Bruchkraft trocken von mindestens 35 N/15 mm und/oder eine Saughöhe von mehr als 0 mm besitzt.

6. Papier für Klebebänder nach mindestens einem der Ansprüche 1 bis 5, **dadurch gekennzeichnet, dass** die Spaltfestigkeit des imprägnierten Papierträgers größer als 1,7 N/15 mm ist.

7. Papier für Klebebänder nach mindestens einem der Ansprüche 1 bis 6, **dadurch gekennzeichnet, dass** der Papierträger auf einer Seite mit einer Trennschicht versehen ist.

8. Papier für Klebebänder nach Anspruch 7, **dadurch gekennzeichnet, dass** der Papierträger auf der gegenüberliegenden Seite der Trennschicht eine Haftvermittlerschicht aufweist.

9. Papier für Klebebänder nach Anspruch 7 oder 8, **dadurch gekennzeichnet, dass** es kalandriert ist

10. Papier für Klebebänder nach Anspruch 9 **dadurch gekennzeichnet, dass** das Papier zwischen einer Stahlwalze und einer Gummiwalze mit einem Spaltdruck von 30 bis 300 N/mm und einer Temperatur zwischen ca. 20°C und 70°C kalandriert wird.

11. Papier für Klebebänder nach mindestens einem der Ansprüche 1 bis 10 **dadurch gekennzeichnet, dass** der Anteil der wiederverwerteten Zellulosefasern in dem imprägnierten Papierträger, bezogen auf die darin enthaltenen Zellulosefasern insgesamt, > 50 %, vorzugsweise ≥ 90 % ist.

12. Klebeband, das ein Papier für Klebebänder nach mindestens einem der Ansprüche 1 bis 11 und eine Klebstoffschicht umfasst.

13. Verfahren zur Herstellung eines Papiers für Klebebänder nach Anspruch 1, bei dem Papierstoff, der wiederverwertete Zellulosefasern und ggf. Hilfsstoffe für die Papierherstellung enthält, gemahlen, zu einer Papierträgerbahn verarbeitet und diese anschließend imprägniert wird.

14. Verfahren zur Herstellung eines Klebebandes, umfassend das Aufbringen von Klebstoff auf das Papier für Klebebänder nach mindestens einem der Ansprüche 1 bis 11, insbesondere auf die Haftvermittlerschicht gemäß Anspruch 8.

15. Verwendung eines Papiers für Klebebänder nach mindestens einem der Ansprüche 1 bis 11 zur Herstellung von Klebebändern.

Europäisches
Patentamt

European
Patent Office

Office européen
des brevets

**EUROPÄISCHER RECHERCHENBERICHT**

**Nummer der Anmeldung**

EP 10 16 0548

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 94 21 552 U1 (PHARMEX AG [CH]) 14. März 1996 (1996-03-14) * Seite 1, Absatz 1 * * Seite 2, Absatz 3 * * Seite 3, Absatz 2 * * Seite 4, Absätze 1,3,4 * ----- | 1,7,8, 11-15 | INV. C09J7/02 D21C5/02 D21H11/14 |
| X,D | DE 44 04 045 A1 (EGER ALBERT GMBH & CO [DE]) 10. August 1995 (1995-08-10) * Spalte 1, Zeilen 3-7 * * Spalte 1, Zeilen 38-41 * * Spalte 1, Zeilen 55-58 * * Spalte 2, Zeilen 17-29 * ----- | 1,8, 12-15 | |
| X,D | JP 6 248244 A (GOYO PAPER WORKING CO LTD) 6. September 1994 (1994-09-06) * Zusammenfassung * ----- | 1,7,12, 13,15 | |
| A | DE 92 04 740 U1 (STEINBEIS GESSNER GMBH) 23. Juli 1992 (1992-07-23) * das ganze Dokument * ----- | 1-15 | |
| A | EP 0 860 489 A2 (BEIERSDORF AG [DE]) 26. August 1998 (1998-08-26) * das ganze Dokument * ----- | 1-15 | RECHERCHIERTE SACHGEBIETE (IPC) C09J D21C D21H |
| A,D | DE 42 11 510 A1 (GESSNER & CO GMBH [DE]) 7. Oktober 1993 (1993-10-07) * das ganze Dokument * ----- | 1-15 | |
| A,D | EP 0 367 965 A2 (BEIERSDORF AG [DE]) 16. Mai 1990 (1990-05-16) * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| München | 27. August 2010 | Beins, Ulrika |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 16 0548

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-08-2010

| Im Recherchenbericht angeführtes Patentdokument | Datum der Veröffentlichung | Mitglied(er) der Patentfamilie | Datum der Veröffentlichung |
|---|---|---|---|
| DE 9421552 U1 | 14-03-1996 | KEINE | |
| DE 4404045 A1 | 10-08-1995 | KEINE | |
| JP 6248244 A | 06-09-1994 | KEINE | |
| DE 9204740 U1 | 23-07-1992 | KEINE | |
| EP 0860489 A2 | 26-08-1998 | DE 19707181 A1 | 27-08-1998 |
| DE 4211510 A1 | 07-10-1993 | KEINE | |
| EP 0367965 A2 | 16-05-1990 | CA 2000365 A1<br>DE 3835507 A1<br>ES 2048803 T3<br>JP 2158678 A<br>JP 2728220 B2 | 19-04-1990<br>26-04-1990<br>01-04-1994<br>19-06-1990<br>18-03-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3835507 A1
- DE 4211510 C2
- DE 4404045 A1
- JP 6248244 A
- DE 4019680 A1

**In der Beschreibung aufgeführte Nicht-Patentliteratur**

- *Altpapier-Liste der europäischen (CEPI/B.I.R.) Standardsorten und ihre Qualitäten,* Juli 2000